Europäisches Patentamt

European Patent Office

Office européen des brevets

(11) Publication number: **0 228 716**
**B1**

(12) **EUROPEAN PATENT SPECIFICATION**

(45) Date of publication of patent specification: **05.12.90**

(21) Application number: **86118176.6**

(22) Date of filing: **31.12.86**

(51) Int. Cl.⁵: **G 01 N 21/64**

(54) **Apparatus for measuring fluorescence of solid.**

(30) Priority: **08.01.86 JP 590/86**

(43) Date of publication of application:
**15.07.87 Bulletin 87/29**

(45) Publication of the grant of the patent:
**05.12.90 Bulletin 90/49**

(84) Designated Contracting States:
**DE GB**

(56) References cited:
**GB-A-2 101 738**
**US-A-3 808 434**
**US-A-4 117 338**
**US-A-4 407 008**

**PATENT ABSTRACTS OF JAPAN, vol. 10, no. 147
(P-460)2204r, 29th May 1986; & JP - A - 60 263
838 (HITACHI SEISAKUSHO K.K.) 27-12-1985
(Cat. X,A)**

(73) Proprietor: **HITACHI, LTD.**
**6, Kanda Surugadai 4-chome
Chiyoda-ku, Tokyo 100 (JP)**

(72) Inventor: **Nogami, Taro
1380-5, Tabiko
Katsuta-shi (JP)**
Inventor: **Owada, Minoru
5193-3, Nakane
Katsuta-shi (JP)**
Inventor: **Sugaya, Isao
10-18, Shiroganedai-5-chome Minato-ku
Tokyo (JP)**

(74) Representative: **Altenburg, Udo, Dipl.-Phys.
et al
Patent- und Rechtsanwälte Bardehle-
Pagenberg-Dost-Altenburg-Frohwitter & Partner
Postfach 86 06 20
D-8000 München 86 (DE)**

Courier Press, Leamington Spa, England.

(56) References cited:

PATENT ABSTRACTS OF JAPAN, vol. 4, no. 149 (P-32)631r, 21st October 1980; & JP - A - 55 99047 (HITACHI SEISAKUSHO K.K.) 28-07-1980 RAPPORT DE LA SESSION DE PRINTEMPS DE LA SOCIETE SUISSE DE PHYSIQUE, vol. 47, 1974, pages 442-445; H. HEDIGER et al.: "Photolumineszenzmessungen an joddotiertem Silberbromid"

## Description

The present invention relates to an apparatus for measuring flourescence, and more particularly to an apparatus suitable for measuring fluorescence emitted from a solid specimen.

The measurement of the fluorescence of a solid specimen by a fluoro-spectrophotometer is to measure surface fluorescence, as described in Japanese patent application (Publication No. 59—45094) which corresponds to the unexamined patent publication JP—A—55 99047. In the above surface fluorescence measurement, the solid specimen is required to have the form of a pellet. Accordingly, the scattered light from the specimen due to the specular reflection and diffuse reflection is larger in intensity than the fluorescence emitted from the specimen. Hence, in a case where it is required to detect a trace constituent of the specimen, there arises a problem that the scattered light exerts a non-negligible influence on the measurement of the fluorescence emitted from the trace constituent and thus the detection sensitivity is reduced.

The Japanese patent application (publication no. JP—A—60 263 838) of December 27, 1985 of Hitachi Seisakusho K. K. relates to a spectrometer achieving an absorption and a fluorescence measurement. The detecting of the fluorescence occurs on the exciting surface side of a flow cell.

The US patent US—A—3 808 434 relates to a method of detecting flaws in plated-through-holes of circuit modules using ultraviolet light. The US patent US—A—4 117 338 concerns an automatic recording fluorometer/densitometer.

It is accordingly an object of the present invention to provide an apparatus for measuring the fluorescence emitted from a solid, in which the measurement of the fluorescence is scarcely affected by the scattering of exciting light at the surface of the solid.

The object of the present invention is reached with the apparatus defined by claim 1.

In order to attain the above object, according to the present invention, light passed through the solid specimen emerges is measured. When incident light (that is, exciting light) is scattered from a solid specimen, more than 90% of the scattered light exists on the front side (namely, the incident-light side) of the specimen and less than 10% of the scattered light is observed on the back side of the specimen. In some cases, less than 1% of the scattered light is observed on the back side. Thus, when the fluorescence emitted from the solid specimen is observed on the back side thereof, the influence of the scattered light on the measurement of the fluorescence is greatly reduced. In a case where the fluorescence of the solid specimen is observed on the back side thereof, a fact that the fluorescence generating portion of the specimen is shifted depending upon how far esciting light travels into the specimen, may raise a serious problem. However, the adverse effect of the shifting of the fluorescence generating portion on a measured value can be eliminated by enlarging the light receiving area of a fluorescence detecting system in a horizontal direction.

The above and other objects, features and advantages of the present invention will become more apparent from the following description taken in conjunction with the accompanying drawing, in which:

Fig. 1 is a schematic diagram showing the construction of an embodiment of an apparatus for measuring the fluorescence of a solid in accordance with the present invention;

Fig. 2 is a schematic diagram showing the structure of the solid specimen holder of Fig. 1;

Fig. 3 is a schematic diagram for explaining the principle of measurement which is used in a conventional apparatus for measuring the fluorescence of a solid;

Fig. 4 is a schematic diagram for explaining the principle of measurement which is used in an apparatus for measuring the fluorescence of a solid in accordance with the present invention;

Fig. 5 is a graph showing the wavelength-dependence of the transmittance of a solid specimen; and

Figs. 6 and 7 are schematic diagrams showing relations between exciting light and fluorescence for different specimens.

The present invention will be explained below in detail, by reference to the drawings.

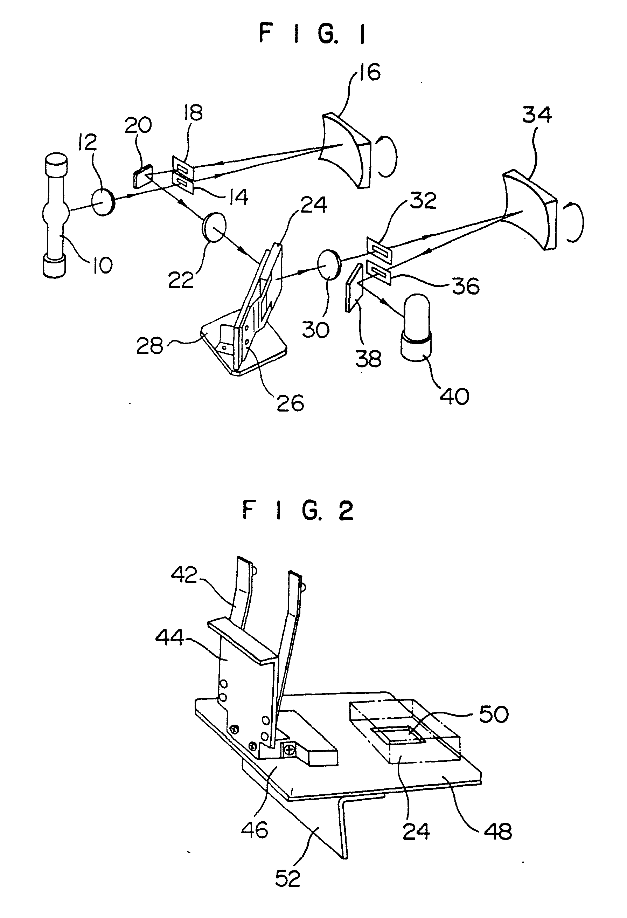

Fig. 1 shows an embodiment of an apparatus for measuring the fluorescence of a solid in accordance with the present invention. Referring to Fig. 1, exciting light emitted from a xenon lamp 10 is converted by a condenser lens 12 into parallel rays, and is then incident upon a secptrometer on the excitation side through an entrance slit 14, to be separated by a concave grating 16 into wavelength components, a desired one of which passes through an exit slit 18. An optical system on the excitation side is made up of the condenser lens 12, the entrance slit 14, the concave grating 16, and the exit slit 18. The characteristic feature of the optical system on the excitation side resides in that incident light is dispersed by the concave grating 16 in a vertical direction, and the lengthwise direction of each of the entrance slit 14 and the exit slit 18 is parallel to a horizontal direction. The monochromatic exciting light emerging from the exit slit 18 is reflected from a mirror 20. The reflected light from the mirror 20 is converted by a lens 22 into parallel rays, and is then incident upon a solid specimen 24. The exciting light beam incident upon the solid specimen 24 has a rectangular cross section. A plane including a longitudinal axis of the cross section and the optical axis of the incident light is perpendicular to the surface of the specimen, and the longitudinal axis is inclined at an angle of about 30 to 75° to a light receiving surface of the specimen 24, and the short axis of the above cross section is parallel to the light receiving surface of the specimen 24. The solid specimen 24 is held by a solid specimen holder 26, a member fixed to the holder 26 is inserted into a portion of a stand 28. A condenser lens 30, an entrance slit 32, a concave grating 34 and an exit slit 36 make up an optical system on the fluorescence side. This optical system is used for observing light emitted from that surface of the specimen 24 where exciting light having passed through the specimen appears. Like the slits 14 and 18, the lengthwise direction of each of the slits 32 and 36 is parallel to a horizontal direction. Thus, the fluorescence emitted from a portion of the specimen 24 which is elongate in a horizontal direction, can be detected by the above optical system. A desired one of wavelength components separated by the concave grating 34 is received by a photomultiplier 40 through the exit slit 36 and a mirror 38.

Fig. 2 is a schematic diagram showing the structure of the solid specimen holder 26. Referring to Fig. 2, a push plate 44 provided with a forked leaf spring 42 falls down on and is lifted up from a front board 48 with the aid of a spring hinge 46. The front board 48 has a window 50, and the solid specimen 24 is placed on the board 48 so that the window 50 is covered by the specimen 24. When the push plate 44 falls down, the leaf spring 42 presses the specimen 24 against the front board 48. A member 52 is inserted into a portion of the stand 28, to secure the board 48 to the stand 28. The exciting light is incident upon the solid specimen 24 through the window 50. The greater part of the exciting light is absorbed by the solid specimen 24, to excite it. The remaining part passes through the specimen, and escapes from a space between the tines of the forked leaf spring 42. The fluorescence emitted from the solid specimen 24 passes through the space between tines of the forked leaf spring 42 or the surroundings of the tips of the above tines, and then travels towards the optical system on the fluorescence side.

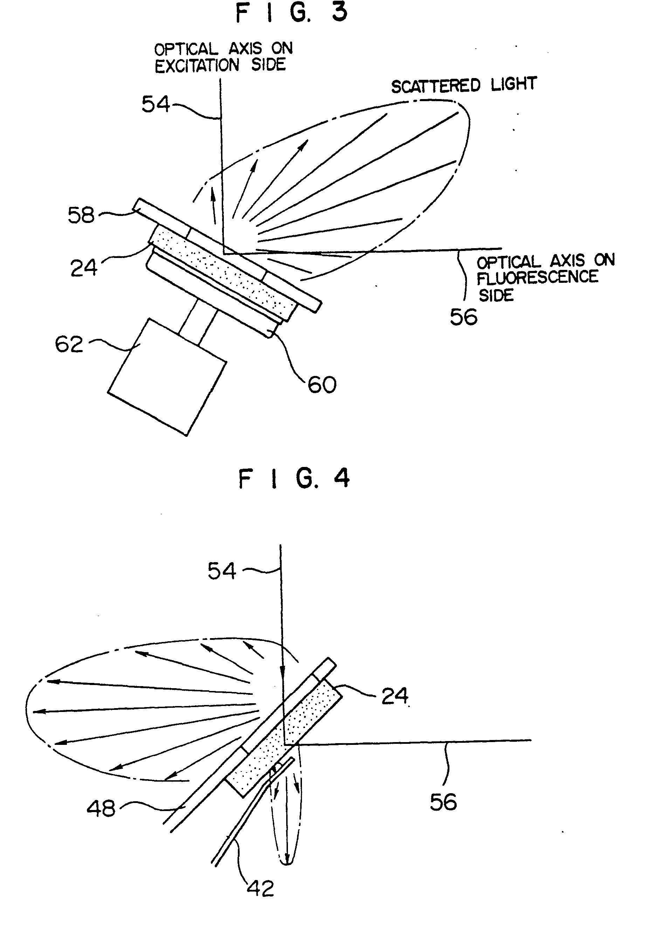

Fig. 3 is a schematic diagram for explaining the principle of measurement which is used in a conventional apparatus for measuring the fluorescence of a solid. Referring to Fig. 3, the light receiving surface of the solid specimen 24 is placed in the vicinity of the intersection of an optical axis 54 on the excitation side and an optical axis 56 on the fluorescence side, to detect the surface fluorescence of the specimen 24 by the optical system on the fluorescence side. The solid specimen 24 is sandwiched between a board 58 having a window and a push member 60, and is pressed against the board 58 by a spring mechanism 62. In Fig. 3, radial lines with arrows indicate the intensity distribution of the surface light of the specimen 24. That is, the length of a line with an arrow increases as the intensity of scattered light is larger. A maximum intensity of scattered light is obtained in the direction of specular reflection. Accordingly, an angle between the exciting light and the light receiving surface of the specimen 24 is made as large as possible, to prevent a large amount of scattered light from traveling toward the optical system on the fluorescence side. However, it is impossible to make the amount of scattered light traveling toward the above optical system, less than a limit, and hence the optical system is obliged to measure the fluorescence in a state that a fairly large amount of scattered light is present. In a case where the difference between the wavelength of the exciting light and a wavelength of the fluorescence specified by the optical system is small, it is impossible to measure the desired wavelength component of the fluorescence in the above state. Further, in the conventional apparatus of Fig. 3, the exciting light having passed through the specimen 24 and the fluorescence emitted on the back side of the specimen 24 are absorbed by or reflected from the push member, and thus are not utilized at all.

Fig. 4 is a schematic diagram for explaining the principle of measurement which is used in an apparatus for measuring the fluorescence of a solid in accordance with the present invention. Referring to Fig. 4, the solid specimen 24 is pressed against the front board 48 by the forked leaf spring 42, as the specimen 24 of Fig. 3 is pressed against the board 58 by the spring mechanism 62. However, unlike the arrangement of Fig. 3, the solid specimen 24 of Fig. 4 is disposed so that the optical axis 54 on the excitation side and the optical axis 56 on the fluorescence side are symmetrical with respect to a plane which intersects the specimen 24 and is parallel to the light receiving surface thereof. Accordingly, the greater part of the scattered light from the light receiving surface travels in a direction opposite to the direction from the specimen 24 towards the optical system on the fluorescence side. Further, the exciting light having passed through the specimen 24 emerges from the back of the specimen 24, but is excellent in directivity. Thus, only an extremely small amount of exciting light can travel along the optical axis 56 on the fluorescence side. Therefore, the amount of exciting light receiving by the optical system on the fluorescence side is smaller than that in the arrangement of Fig. 3, by one order of magnitude or more.

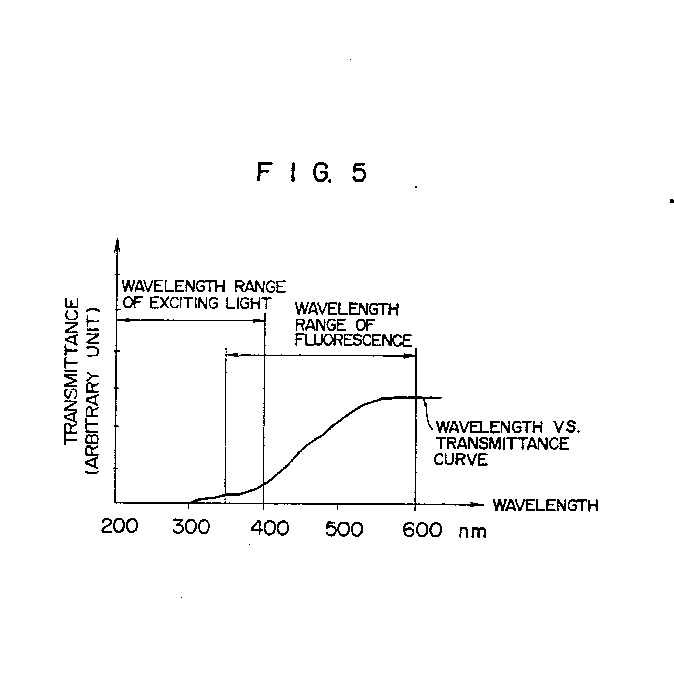

Fig. 5 is a graph for explaining another advantage of the present invention, and shows an example of the wavelength-dependence of transmittance of solid specimen. As shown in Fig. 5, the transmittance of a solid specimen is low in a short wavelength region, and is high in a long wavelength region. Solid specimens of various kinds have wavelength vs. transmittance characteristics similar to those shown in Fig. 5. In many case, the wavelength of exciting light lies in a range from 200 to 400 nm, and the wavelength of measured fluorescence is selected within a range from 350 to 600 nm. Thus, the solid specimen itself acts as an optical filter for the exciting light. That is, in a case which the fluorescence emitted from the specimen is detected on the back side of the specimen, the specimen prevents the exciting light from reaching a detection system, but the fluorescence can reach the detection system without being prevented by the specimen itself. In other words, the specimen has a function of enhancing a ratio of the intensity of detected fluorescence to the intensity of detected, exciting light.

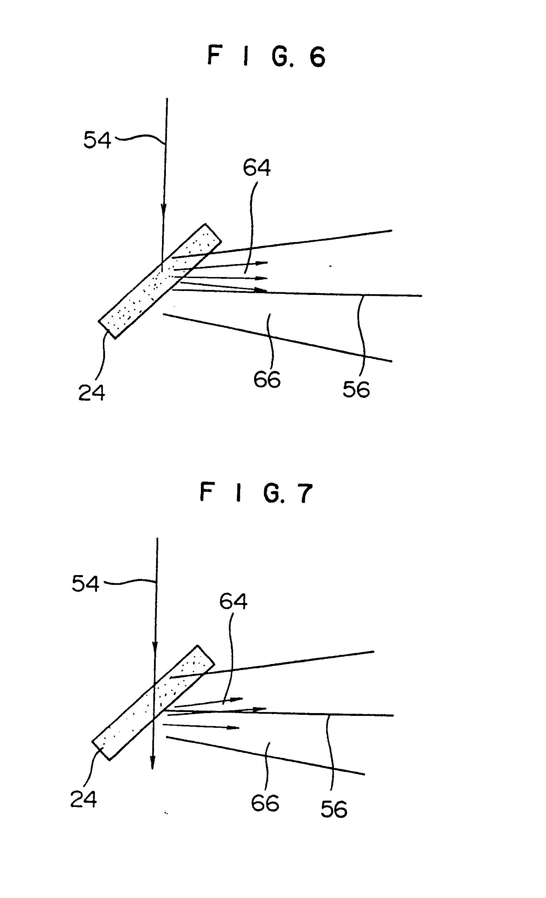

Figs. 6 and 7 are schematic diagrams showing relations between exciting light and fluorescence for two kinds of solid specimens. It depends upon the kind of a solid specimen how far the exciting light travels into the solid specimen. Also, it depends upon the kind of the solid specimen whether the exciting light can pass through the solid specimen or not. Accordingly, when viewed from the optical system on the fluorescence side, a fluorescence generating portion of the solid specimen is shifted in a horizontal direction, depending upon the kind of the solid specimen. A reduction in measuring accuracy due to the above shifting of fluorescence generating portion can be prevented by enlarging the light receiving area of the optical system on the fluorescence side, in a horizontal direction. Fig. 6 shows a case where the transmittance of the solid specimen 24 is small, and thus fluorescence 64 is generated mainly in the vicinity of the light receiving surface of the specimen. As shown in Fig. 6, the fluorescence 64 lies within a light receiving range 66, and thus the optical system on the fluoresence side can detect the fluorescence 64 without losing a large amount of light. While, Fig. 7 shows a case where exciting light travels deep into the specimen 24 and the fluorescence 64 is generated mainly in the vicinity of the back surface of the specimen 24. In this case, also, the fluorescence 64 lies within the light receiving range 66, and thus the optical system can detect the fluorescence 64 without losing a large amount of light.

In many cases, the fluorescence detection efficiency can be increased by making an aperture on the fluorescence side (for example, the entrance slit on the fluorescence side) greater than an aperture on the excitation side (for example, the exit slit on the excitation side). This is because the size of a fluorescence generating portion of the solid specimen viewed from the fluorescence side is often made greater than the size of an exciting light beam at the light receiving surface of the specimen by the multiple scattering of exciting light and fluorescence.

As has been explained in the foregoing, according to the present invention, the measurement of fluorescence is scarcely affected by scattered light, and thus a trace constituent of a solid specimen can be detected at high sensitivity.

**Claims**

1. An apparatus for measuring the fluorescence of a solid containing a plate type solid specimen and including a light source (10), an optical system on the excitation side (12, 14, 16, 18) for irradiating the plate type solid specimen (24) with exciting light from the light source, an optical system on the fluorescence side (30, 32, 34, 36) for receiving fluorescence emitted from the plate type solid specimen, and a photodetector (40) for detecting light from the optical system on the fluorescence side, wherein the exciting light is incident upon a surface of the plate type solid specimen, characterised in that the optical system on the fluorescence side is provided so as to receive the fluorescence emitted from another surface of the plate type solid specimen where said exciting light having passed through the plate type solid specimen emerges, the fluorescence being detected in a direction deviating from an optical axis of the exciting light.

2. An apparatus according to Claim 1, wherein a light beam having a rectangular cross section is used as the exciting light incident on the plate type solid specimen (24), and the plate type solid specimen is disposed so that a longitudinal axis of the cross section of the exciting light beam is inclined at a predetermined angle to a light receiving surface of the plate type solid specimen, and a pair of short sides of the cross section are parallel to the light receiving surface of the plate type solid specimen.

3. An apparatus according to Claim 2, wherein the optical system on the fluorescence side is disposed so that the path of the fluorescence emitted from that surface of the plate type solid specimen where exciting light having passed through the plate type solid specimen emerges, and received by the optical system on the fluorescence side and the path of the exciting light incident upon the plate type solid specimen are symmetrical with respect to a plane which intersects the plate type solid specimen and is parallel to the light receiving surface thereof.

4. An apparatus according to Claim 1, wherein the optical system on the excitation side includes a concave grating (16) and slits (14, 18), the concave grating is disposed so that diffracted light from the concave grating is dispersed in a vertical direction, and the lengthwise direction of each of the slits is parallel to a horizontal direction.

5. An apparatus according to Claim 1, wherein the optical system on the fluoresence side includes a concave grating (34) and slits (32, 36), the concave grating is disposed so that diffracted light from the concave grating is dispersed in a vertical direction, and the lengthwise direction of each of the slits is parallel to a horizontal direction.

6. An apparatus according to Claim 1, wherein the exciting light is selected so that the wavelength of the exciting light is shorter than that of a desired wavelength component of the fluoresence.

7. An apparatus according to Claim 4 or 5, wherein the size of the slits (32, 36) on the fluoresence side is made greater than the size of the slits (14, 18) on the excitation side.

**Patentansprüche**

1. Vorrichtung zur Messung der Fluoreszenz eines Feststoffes, die eine plattenförmige feste Probe enthält und aufweist: eine Lichtquelle (10), ein optisches System auf der Anregungsseite (12, 14, 16, 18) zum Bestrahlen der plattenförmigen festen Probe (24) mit Anregungslicht von der Lichtquelle, ein optisches System auf der Fluoreszenzseite (30, 32, 34, 36) zum Empfangen von Fluoreszenz, die durch die plattenförmige feste Probe ausgestrahlt wird, und einen Fotodetektor (40) zum Erfassen von Licht von optischen System auf der Fluoreszenzseite, wobei das Anregungslicht auf eine Oberfläche der plattenförmigen festen Probe fällt, dadurch gekennzeichnet, daß das optische System auf der Fluoreszenzseite derartig angeordnet ist, daß es die Fluoreszenz empfängt, die durch eine andere Oberfläche der plattenförmigen festen Probe ausgestrahlt wird, wobei das Anregungslicht, das die plattenförmige feste Probe passiert hat, heraustritt, wobei die Fluoreszenz in einer Richtung, die von der optischen Achse des Anregungslichtes abweicht, erfaßt wird.

2. Vorrichtung nach Anspruch 1, in der ein Lichtstrahl, der einen rechteckigen Querschnitt aufweist, als Anregungslicht, das auf die plattenförmige feste Probe (24) fällt, benutzt wird, und die plattenförmige feste Probe ist derartig angeordnet, daß eine Längsachse des Querschnittes des Anregungslichtstrahles um einen bestimmten Winkel zu einer lichtempfangenden Oberfläche der plattenförmigen festen Probes geneigt ist, und ein Paar kurze Seiten des Querschnittes stehen parallel zu der lichtempfangenden Oberfläche der plattenförmigen festen Probe.

3. Vorrichtung nach Anspruch 2, in der das optische System auf der Fluoreszenzseite derartig angeordnet ist, daß der Weg der Fluoreszenz, die von der Oberfläche des plattenförmigen festen Probe ausgestrahlt wird, wobei das Anregungslicht, das die plattenförmige feste Probe passiert hat, heraustritt, und durch das optische System auf der Fluoreszenzseite empfangen wird, und der Weg des Anregungslichtes, das auf die plattenförmige feste Probe fällt, symmetrisch sind in bezug auf eine Ebene, die die plattenförmige feste Probe schneidet und parallel zu dessen lichtempfangenden Oberfläche verläuft.

4. Vorrichtung nach Anspruch 1, in der das optische System auf der Anregungsseite ein konkaves Gitter (16) und Schlitze (14, 18) aufweist, wobei das konkave Gitter derart angeordnet ist, daß gebeugtes Licht von dem konkaven Gitter in eine vertikale Richtung gestreut wird, und die Längsrichtung jedes Schlitzes parallel zu einer horizontalen Richtung verläuft.

5. Vorrichtung nach Anspruch 1, in der das optische System auf der Fluoreszenz-seite ein konkaves Gitter (34) und Schlitze (32, 36) aufweist, wobei das konkave Gitter derart angeordnet ist, daß gebeugtes Licht von dem konkaven Gitter in eine vertikale Richtung gestreut wird, und die Längsrichtung jedes Schlitzes parallel zu einer horizontalen Richtung verläuft.

6. Vorrichtung nach Anspruch 1, in der das Anregungslicht derart ausgewählt wird, daß die Wellenlänge des Anregungslichtes kürzer als die einer gewünschten Wellenlängekomponente der Fluoreszenz ist.

7. Vorrichtung nach Anspruch 4 oder 5, in der die Größe der Schlitze (32, 36) auf der Fluoreszenzseite größer als die Größe der Schlitze (14, 18) auf der Anregungsseite ist.

**Revendications**

1. Appareil pour mesurer la fluorescence d'un solide contenant un specimen solide en forme de plaque et comprenant une source lumineuse (10), un système optique dans la partie d'excitation (12, 14, 16, 18) pour irradier le specimen solide (24) en forme de plaque au moyen d'une lumière d'excitation provenant de la source lumineuse, un système optique dans la partie de fluorescence (30, 32, 34, 36) pour recevoir la fluorescence emise par le specimen solide en forme de plaque, et un photodétecteur (40) pour détecter la lumière provenant du système optique dans la partie de fluorescence, et dans lequel la lumière d'excitation tombe sur la surface du specimen solide en forme de plaque characterisé en ce que le système optique dans la partie de fluorescence est concu de façon à recevoir la fluorescence emise par une autre surface du specimen solide en forme de plaque où la lumière d'excitation ayant passé a travers le specimen solide en forme de plaque émerge, la fluorescence étant detectée dans une direction déviant de l'axe optique de la lumière d'excitation.

2. Appareil selon la revendication 1, dans lequel un rayon lumineux ayant une section transversale rectangulaire est utilisé comme lumière d'excitation tombant sur le specimen solide (24) de forme de plaque, et le specimen solide en forme de plaque est disposé de façon telle qu'un axe longitudinal de la section transversale du rayon du lumière d'excitation est incliné selon un angle prédéterminé par rapport à une surface du specimen solide en forme de plaque recevant la lumière, et une paire de côtés courts de la section transversale sont parallèles à la surface du specimen solide en forme de plaque recevant la lumière.

3. Appareil selon la revendication 2, dans lequel le système optique dans la partie de fluorescence est disposé de façon telle que la trajectoire de la fluorescence émise par cette surface du specimen solide en forme de plaque où la lumière d'excitation ayant passé à travers le specimen solide en forme de plaque émerge et est reçue par le système optique dans la partie de fluorescence, et que la trajectoire de la lumière d'éxcitation tombant sur le specimen solide en forme de plaque est symmétrique par rapport à un plan qui coupe le specimen solide en forme de plaque et est parallèle à sa surface recevant la lumière.

4. Appareil selon la revendication 1, dans lequel le système optique dans la partie d'éxcitation comprend un élément de diffraction concave (16) et des fentes (14, 18), l'élément de diffraction concave étant disposé de façon telle que la lumière diffractée provenant de l'élément de diffraction concave est dispersée dans une direction verticale, la direction longitudinale de chacune des fentes étant parallèle à une dierction horizontale.

5. Appareil selon la revendication 1, dans lequel le système optique dans la partie de fluorescence comprend un élément de diffraction concave (34) et des fentes (32, 36), l'élément de diffraction concave étant disposé de façon telle que la lumière diffractée provenant de l'élément de diffraction concave est dipersée dans une direction verticale, la direction longitudinale de chacune des fentes étant parallèle à une direction horizontale.

6. Appareil selon la revendication 1, dans lequel la lumière d'éxcitation est selectionnée de façon à ce que la longueur d'onde de la lumière d'éxcitation soit plus courte que celle d'une longueur d'onde desirée qui est une composante de la fluorescence.

7. Appareil selon la revendication 4 ou 5, dans lequel la dimension des fentes (32, 36) dans la partie de fluorescence est plus grande que la dimension des fentes (14, 18) dans la partie d'excitation.

# F I G. 1

# F I G. 2

# F I G. 3

OPTICAL AXIS ON
EXCITATION SIDE

SCATTERED LIGHT

54

58

24

OPTICAL AXIS ON
FLUORESCENCE
SIDE

56

62

60

# F I G. 4

54

24

48

56

42

# F I G. 5

# F I G. 6

# F I G. 7